Europäisches Patentamt

(19) European Patent Office

Office européen des brevets

(11) Numéro de publication : **0 368 852 B1**

(12) **FASCICULE DE BREVET EUROPEEN**

(45) Date de publication du fascicule du brevet :
07.08.91 Bulletin 91/32

(51) Int. Cl.⁵ : **B65G 31/02, B65G 65/32**

(21) Numéro de dépôt : **88903160.5**

(22) Date de dépôt : **24.03.88**

(86) Numéro de dépôt international :
**PCT/BE88/00008**

(87) Numéro de publication internationale :
**WO 88/07966 20.10.88 Gazette 88/23**

(54) **DISPOSITIF PERFECTIONNE DE PROJECTION DE GRAINS.**

Jointe à la demande no. 88870052.3/0287547
(numéro de dépôt/numéro de publication de la
demande européenne) par décision du
28.01.91.

(30) Priorité : 13.04.87 LU 86842

(43) Date de publication de la demande :
23.05.90 Bulletin 90/21

(45) Mention de la délivrance du brevet :
07.08.91 Bulletin 91/32

(84) Etats contractants désignés :
AT BE CH DE ES FR GB GR IT LI LU NL SE

(56) Documents cités :
AU-B- 524 710
DE-A- 3 104 345

(73) Titulaire : **ECOPOL SOCIETE ANONYME**
**11, Avenue Emile Reuter**
**L-Luxembourg (LU)**

(72) Inventeur : **DE WALSCHE, Daniel**
**Grote Moorstraat 4**
**B-9050 Evergem (BE)**

(74) Mandataire : **Van Malderen, Michel et al**
**p.a. Office van Malderen avenue J.S. Bach**
**22/43**
**B-1080 Bruxelles (BE)**

## Description

### Arrière-plan technologique

Le stockage des matières granuleuses telles que les grains de céréales, notamment le blé, le maïs, etc... s'effectue essentiellement soit verticalement dans des silos, soit à plat dans des magasins ventilés. Cette dernière technique connaît depuis peu un important développement car elle permet une meilleure conservation avec un investissement plus réduit en installations de stockage.

Le transport des grains, que ce soit par voie maritime ou fluviale, s'effectue quant à lui habituellement dans des cales qui doivent être alimentées par des dispositifs adéquats.

Aussi bien pour le stockage à plat que pour le transport, il est habituel d'alimenter les grains vers un dispositif de projection quelques fois appelé "arrimeur". Un tel dispositif est conçu pour recevoir par une trémie ou goulotte suspendue sous une courroie d'alimentation, les grains à manipuler. Ceux-ci tombent de la goulotte sur une courroie entraînée à grande vitesse qui projette les grains dans la direction souhaitée. De tels dispositifs sont conçus actuellement pour traiter des débits atteignant jusqu'à 600 tonnes métriques par heure (voir DE-A-3104345 et AU-B-524710).

Ils servent à amener les grains sur des épaisseurs pouvant atteindre jusqu'à 10 mètres et la projection s'effectue sur des distances de l'ordre de 20 mètres ou plus. Ainsi qu'on l'a indiqué ci-dessus, ledit dispositif est suspendu afin de diminuer la réaction produite par la projection des grains et agissant sur la courroie de projection.

La réaction produite par la projection des grains se traduit par un déplacement de la courroie de projection, par pivotement sur son axe de suspension et un positionnement d'équilibre de cette courroie s'établit, qui est fonction du débit de matière.

Or ce débit est nécessairement variable puisque l'alimentation ne peut pas être toujours régulière. En effet, l'alimentation de la trémie est soumise à des variations aléatoires, résultant par exemple de la succession des camions ou remorques amenant les grains ou d'autres variations de l'alimentation des matières en aval de la trémie.

Pour maintenir un angle de projection donné par rapport à l'horizontale, un opérateur doit donc nécessairement ajuster en permanence l'inclinaison du dispositif de projection.

### Objet de l'invention

La présente invention vise à apporter divers perfectionnements aux dispositifs de l'état de la technique qui permettent de conserver une disposition angulaire ou une assiette du dispositif de projection précité en dépit des fluctuations des matières alimentées.

### Description des éléments caractéristiques de l'invention.

Le dispositif de projection comporte essentiellement un cadre de suspension qui est suspendu à un dispositif à courroie d'alimentation selon un premier axe et auquel est suspendue une trémie d'alimentation selon un second axe essentiellement perpendiculaire au premier, ladite trémie pouvant tourner autour d'un axe de symétrie vertical, ainsi qu'un cadre de support qui porte la courroie de projection ainsi que des moyens d'entraînement de celle-ci, ledit cadre de support pouvant basculer par rapport à ladite trémie grâce à un vérin de commande le reliant à celle-ci. Selon l'invention, le dispositif de support est muni d'un dispositif correcteur automatique d'assiette.

Conformément à la présente invention, le dispositif correcteur d'assiette consiste en un dispositif pendulaire dans lequel un pendule est agencé de manière à osciller entre deux détecteurs dont la position est réglable et qui fournissent un signal de commande au vérin de commande de la position angulaire du cadre de support.

Selon une forme d'exécution préférée, les deux détecteurs sont des détecteurs de métaux, insensibles à la poussière, qui détectent la présence du pendule métallique.

Les deux détecteurs sont agencés sur une plaque support articulée sur le cadre de support et déplaçable angulairement à l'aide d'un vérin de réglage monté entre ladite plaque de support et le cadre de support.

On constate que pour un débit de matière donné, l'opérateur peut régler la position angulaire du cadre de support de la courroie de projection ; en cas de variation du débit de matière, la réaction qui agit sur le dispositif de projection suspendu varie également et il s'ensuit que la position du cadre de support se modifie. Le pendule qui maintient essentiellement sa position verticale passe dès lors dans le champ d'action de l'un des deux détecteurs qui transmet un signal correspondant au vérin de commande en vue de corriger l'assiette du cadre de support de manière adéquate, de sorte que la matière projetée se déverse essentiellement au même endroit.

Avantageusement, le cadre de support est articulé sur la trémie d'alimentation via un axe qui constitue également un axe de rotation du tambour d'entrainement de la courroie de projection. On a constaté que cet agencement permet un réglage facile de l'angle de projection de la matière.

### Brève description des figures

L'invention sera décrite plus en détail en se référant à la description des figures dans lesquelles :

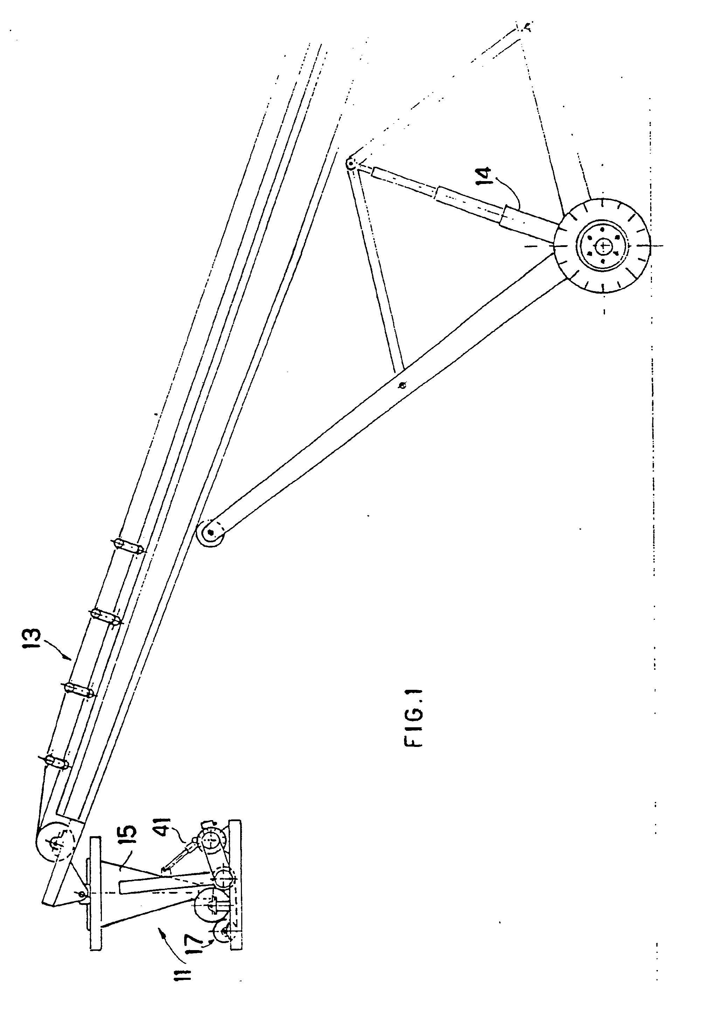

— la figure 1 est une vue générale du dispositif de projection de l'état de la technique suspendu à un transporteur alimentant la trémie, et

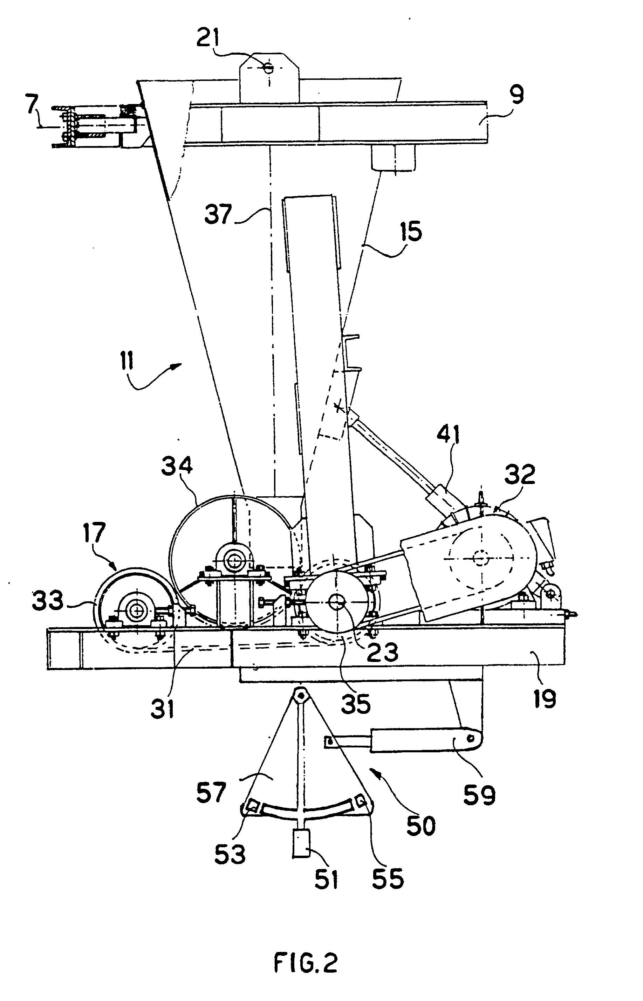

— la figure 2 est une vue latérale du dispositif de projection de l'invention.

## Description d'une forme d'exécution préférée de l'invention.

Le dispositif de projection de l'invention qui porte le repère général 11 est suspendu à un système d'alimentation à bande transporteuse portant le repère général 13. Celui-ci est relevable ou abaissable par tout dispositif approprié tel qu'un vérin 14 qui s'adapte à différentes configurations géométriques des lieux d'utilisation. Le dispositif 11 est constitué essentiellement d'une trémie 15 destinée à alimenter un dispositif de projection identifié par le repère général 17 qui est monté sous la trémie 15. La trémie 17 est suspendue à un cadre de suspension 9 par un axe (pivot) 7, ledit cadre 9 étant suspendu par un axe 21 au système d'alimentation 13. Par ailleurs, la trémie est agencée de manière telle dans le cadre 9 qu'elle puisse tourner autour d'un axe de symétrie central 37.

Le dispositif de projection est agencé sur un cadre 19 monté de manière basculable par rapport à la trémie 15 grâce à un axe 23.

La projection est assurée par une bande 31 entraînée à grande vitesse par un moteur 32 à l'intervention de tambours 33, 34, 35 qui pincent la courroie 31.

En l'absence de toute alimentation en grains, l'ensemble constitué par la trémie 15 et le dispositif de projection 17 prendra une position d'équilibre déterminée. La conception de l'ensemble est telle que cette position correspond essentiellement à la verticalité de l'axe central 37 de la trémie 15.

Conformément à l'état de la technique, l'inclinaison angulaire du dispositif de projection 17 est réglable à l'intervention d'un vérin 41 monté entre la trémie 15 et le cadre 19.

Un tel dispositif tel qu'il est monté subit les oscillations de l'ensemble constitué par la trémie 15 et le dispositif de projection 17 en fonction du débit de matière alimentée, par suite de la réaction résultant de la projection de quantité non constante de matière.

L'opérateur est donc obligé d'agir manuellement sur la commande du vérin 41 afin de garder un angle de projection constant, dans une telle forme d'exécution de l'état de la technique.

Afin de remédier à cet inconvénient, il est prévu selon l'invention un dispositif correcteur d'assiette portant le repère général 50. Il est constitué par un dispositif pendulaire dans lequel un pendule 51 est agencé de manière à pouvoir osciller entre deux détecteurs 53 et 55, tels par exemple des détecteurs de métaux. Ceux-ci sont montés sur une plaque support 57 suspendue au cadre de support 19 et déplaçable angulairement moyennant un vérin de réglage 59 monté entre ladite plaque support et le cadre 19. Ce vérin sert à fixer une valeur de consigne variable.

Afin de régler la position angulaire du cadre de support 19, on n'agit pas directement sur le vérin 41 comme dans les dispositifs de l'état de la technique mais sur le vérin de réglage 59 qui déplace les détecteurs 55 et 57. Ceux-ci émettent alors un signal qui, transmis au vérin 41, commande la position angulaire du cadre 19 ou l'assiette du dispositif de projection jusqu'a ce que le pendule maintenu en position essentiellement verticale n'entre plus dans le champ d'action des détecteurs, c'est-à-dire jusqu'à ce que celui-ci se positionne entre les deux détecteurs, selon la valeur de consigne affichée.

Ainsi, lorsque par suite d'une variation de débit de matière, la réaction agissant sur le dispositif de projection modifie son assiette et de ce fait l'endroit de déversement de la matière, le pendule 51 passe dans le champ d'action de l'un des détecteurs 53 ou 55. Ceci commande par conséquent le vérin 41 qui corrige la position du cadre 19 jusqu'a ce que le pendule 51 se trouve a nouveau entre les deux détecteurs.

Dans le cas ou un opérateur désire modifier l'assiette du cadre 19 pour atteindre un autre endroit de déversement, il peut agir sur le vérin de réglage 59 pour afficher une autre valeur de consigne.

Il s'est avéré particulièrement avantageux de monter le cadre 19 de manière telle qu'il soit articulé sur la trémie 15 par l'arbre 23 qui constitue également l'arbre de rotation du tambour d'entraînement 35 de la courroie de projection 31.

Il y a lieu de noter que le dispositif perfectionné selon la présente invention permet une manipulation notablement plus aisée et permet de régler l'endroit de déversement de la matière de façon essentiellement plus précise. On constate également que le dispositif de correction d'assiette décrit convient particulièrement dans l'application considérée qui est soumise à de sévères conditions d'utilisation telles qu'une atmosphère poussiéreuse.

Par ailleurs, on note que le dispositif conforme à la présente invention n'est pratiquement plus sensible aux variations de réaction, c'est-à-dire aux variations de débit de matière.

Il est bien évident que la présente invention n'est pas limitée à la forme d'exécution préférée décrite mais qu'elle s'étend au cadre défini par les revendications.

## Revendications

1. Dispositif de projection comportant essentiellement un cadre de suspension (9) qui est suspendu à un dispositif (13) à courroie d'alimentation selon un premier axe (21) et auquel est suspendue une trémie d'alimentation (15) selon un second axe (7) essentiellement perpendiculaire au premier (21), ladite trémie (15) pouvant tourner autour d'un axe de symétrie vertical (37), ainsi qu'un cadre de support (19) qui porte la courroie de projection (31) ainsi que des moyens d'entraînement de celle-ci (32, 33, 34, 35), ledit cadre de support (19) pouvant basculer par rapport à ladite trémie (15) grâce à un vérin de commande (41) le reliant à celle-ci, caractérisé en ce que le cadre de support (19) est muni d'un dispositif correcteur automatique d'assiette (50).

2. Dispositif de projection selon la revendication 1 caractérisé en ce que le dispositif correcteur d'assiette (50) consiste en un dispositif pendulaire dans lequel un pendule (51) est agencé de manière à osciller entre deux détecteurs (53, 55) dont la position est réglable et qui fournissent un signal de commande au vérin de commande (41) de la position angulaire du cadre de support (19).

3. Dispositif de projection selon la revendication 1 ou 2 caractérisé en ce que les deux détecteurs (53, 55) sont agencés sur une plaque support (57) articulée sur le cadre de support (19) et déplaçable angulairement à l'aide d'un vérin de réglage (59) monté entre ladite plaque support (57) et le cadre de support (19).

4. Dispositif de projection selon l'une quelconque des revendications 2 ou 3 caractérisé en ce que les détecteurs (53, 55) sont des détecteurs de métaux.

5. Dispositif de projection selon l'une quelconque des revendications précédentes caractérisé en ce que le cadre de support (19) est articulé sur la trémie (15) via un axe (23) qui constitue également un axe de rotation du tambour d'entraînement (35) de la courroie de projection (31).

## Patentansprüche

1. Schleudervorrichtung, aus im wesentlichen einem Aufhängerahmen (9), der über eine erste Achse (21) an einer Zuführungsband-Vorrichtung (13) aufgehängt ist, und an dem über eine zweite Achse (7), die im wesentlichen senkrecht zu der ersten Achse (21) angeordnet ist, ein Zuführungstrichter (15) aufgehängt ist, wobei der besagte Trichter (15) sich um eine vertikale Symmetrieachse (37) drehen kann, sowie aus einem Tragrahmen (19), der das Schleuderband (31) trägt, und aus Antriebsmitteln (32, 33, 34, 35) für dieses Schleuderband (31), wobei der besagte Tragrahmen (19) mittels eines Steuerzylinders (41), der den besagten Tragrahmen (19) mit dem besagten Trichter (15) verbindet, bezüglich des besagten Trichters (15) gekippt werden kann, **dadurch gekennzeichnet, daß** der Tragrahmen (19) mit einer automatischen Lagekorrekturvorrichtung (50) versehen ist.

2. Schleudervorrichtung gemäß Anspruch 1, **dadurch gekennzeichnet, daß** die Lagekorrekturvorrichtung (50) aus einer Pendelvorrichtung besteht, bei der ein Pendel (51) so angeordnet ist, daß es zwischen zwei Sensoren (53, 55) schwingt, deren Position einstellbar ist, und die ein Steuersignal für die Winkelposition des Tragrahmens (19) an den Steuerzylinder (41) liefern.

3. Schleudervorrichtung gemäß Anspruch 1 oder 2, **dadurch gekennzeichnet, daß** die zwei Sensoren (53, 55) auf einer Halteplatte (57) angeordnet sind, die auf dem Tragrahmen (19) gelenkig gelagert ist und mittels eines Einstellzylinders (59), der zwischen der besagten Halteplatte (57) und dem Tragrahmen (19) angebracht ist, geschwenkt werden kann.

4. Schleudervorrichtung gemäß irgendeinem der Ansprüche 2 oder 3, **dadurch gekennzeichnet, daß** die Sensoren (53, 55) Metallsensoren sind.

5. Schleudervorrichtung gemäß irgendeinem der vorhergehenden Ansprüche, **dadurch gekennzeichnet, daß** der Tragrahmen (19) über eine Achse (23), die auch eine Drehachse der Antriebstrommel (35) des Schleuderbandes (31) darstellt, auf dem Trichter (15) gelenkig gelagert ist.

## Claims

1. A projection device comprising essentially a suspension frame (9) which is suspended on a feed belt device (13) on a first axis (21) and on which a feed hop-per (15) is suspended on a second axis (7) substantially at right angles to the first axis (21), said hopper (15) being adapted to turn about a vertical axis of symmetry (37), and further comprising a support frame (19) which carries the projection belt (31) as well as drive means (32, 33, 34, 35) for the latter, said support frame (19) being adapted to be tilted relative to said hopper (15) with the aid of a control ram (41) connecting it to the hopper, wherein the support frame (19) is provided with a automatic position correcting device (50).

2. The projection device as claimed in claim 1, wherein the position correcting device (50) consists of a pendulum device in which a pendulum (51) is arranged to oscillate between two detectors (53, 55) whose positions are adjustable and which supply a control signal to the ram (41) controlling the angular position of the support frame (19).

3. The projection device as claimed in claim 1 or 2, wherein the two detectors (53, 55) are arranged on a support plate (57) pivoted on the support frame (19) and angularly displaceable with the aid of an adjusting ram (59) mounted between said support plate (57) and the support frame (19).

4. The projection device as claimed in either of claims 2 or 3, wherein the detectors (53, 55) are metal detectors.

5. The projection device as claimed in any one of the preceding claims, wherein the support frame (19) is pivoted on the hopper (15) by means of an axis (23) which is also an axis of rotation of the drum (35) driving the projection belt (31).

FIG.1

EP 0 368 852 B1

FIG.2